# FASCICULE DE BREVET EUROPEEN

(11) **EP 0 889 429 B1**
(45) Date de publication et mention de la délivrance du brevet: **10.09.2003**
(21) Numéro de dépôt: 98401674.1
(22) Date de dépôt: 03.07.1998
(51) Int. Cl.: G06K 7/00

(54) **Lecteur de cartes à puces à protocole de transmission rapide**
Chipkartenleser unter Verwendung eines schnellen Übertragungsprotokolls
IC card reader using fast transmission protocol

(30) Priorité: 04.07.1997 FR 9708514
(43) Date de publication de la demande: 07.01.1999
(73) Titulaire: STMicroelectronics S.A., 92120 Montrouge (FR)
(72) Inventeur: Albaret, Thierry, 92593 Levallois-Perret Cedex (FR)
(74) Mandataire: Ballot, Paul

(56) Documents cités:
- EP-A- 0 680 002
- EP-A- 0 727 759

## Description

L'invention concerne un lecteur de carte à puce destiné à être connecté à un micro-ordinateur pour assurer un échange de données, en lecture ou en écriture, entre la carte et le micro-ordinateur, sous le contrôle du micro-ordinateur.

La plupart des lecteurs de carte à puce prévus pour ce type d'application fonctionnent grâce à un microprocesseur suffisamment puissant pour permettre d'une part un contrôle de la communication entre la carte et le lecteur et d'autre part la communication entre le lecteur et le micro-ordinateur (voir Par exemple EP-A-0 727 759). La difficulté de la communication entre la carte et le micro-ordinateur tient en effet d'une part à l'absence totale de synchronisme entre le fonctionnement de la carte et le fonctionnement du micro-ordinateur, et d'autre part au fait que le micro-ordinateur peut être en cours d'exécution de tâches autres que la communication avec le lecteur de carte, à des moments où la carte est en communication avec le lecteur. La présence d'un microprocesseur dans le lecteur est donc en général considérée comme nécessaire pour assurer la gestion des échanges. Mais elle est coûteuse.

On propose selon l'invention un lecteur de carte à puce commandable par un micro-ordinateur et capable d'assurer des échanges entre la carte et le micro-ordinateur, le lecteur fonctionnant sans microprocesseur mais étant pourvu d'une part d'une mémoire tampon, assurant le stockage provisoire des données lues dans la carte, et d'autre part d'un diviseur de fréquence programmable par un signal numérique, pour fixer à volonté, par division de fréquence d'une horloge interne du lecteur, le temps de bit, c'est-à-dire la durée correspondant à la transmission d'un bit de donnée dans les échanges de données entre la carte à puce et le lecteur. Le choix d'une valeur de temps de bit est fixé par le micro-ordinateur qui envoie au diviseur de fréquence une commande définissant le rapport de division.

Autrement dit, on prévoit que le lecteur de carte est constitué d'un circuit électronique simplifié, sans microprocesseur, donc incapable de fonctionner sous le contrôle d'un programme d'instructions internes mais comportant un moyen très simple de réglage du protocole de transmission de données entre la carte à puce et le lecteur, afin que d'une part on puisse décider d'un protocole de transmission plus ou moins rapide entre la carte et le lecteur, et que d'autre part la rapidité du protocole n'entraîne pas une perte de données dans les échanges entre le micro-ordinateur et la carte. Le réglage du protocole est effectué grâce à l'envoi d'un signal numérique par le micro-ordinateur au lecteur, ce signal numérique agissant sur un diviseur de fréquence programmable contenu dans le lecteur.

Plus précisément, l'invention propose donc un lecteur de carte à puce fonctionnant sans microprocesseur sous le contrôle d'un micro-ordinateur, pour assurer des échanges de données entre la carte et le micro-ordinateur, le lecteur comportant d'une part une mémoire tampon de données permettant de stocker provisoirement une donnée lue dans la carte en attendant sa lecture par le micro-ordinateur, et d'autre part un diviseur de fréquence programmable numériquement, apte à recevoir, à partir d'un bus de sortie du micro-ordinateur, un signal numérique de commande représentant un rapport de division désiré, le diviseur de fréquence recevant un signal d'horloge de référence élaboré dans le lecteur, et fournissant un signal de synchronisation pour les échanges de données entre la carte et le lecteur, ce signal de synchronisation ayant pour période une valeur de temps de bit désirée, cette période étant obtenue par division de fréquence de l'horloge de référence selon le rapport de division fourni par le micro-ordinateur.

En pratique, le rapport de division fourni par le micro-ordinateur pourra être compris entre 2 et 372, la valeur 2 correspondant à un protocole d'échange très rapide, et la valeur 372 ne correspondant pas au protocole le plus lent défini par la norme ISO 7816-3 mais étant la plus utilisée. De préférence, le diviseur peut effectuer une division au moins dans les rapports 2, 31 et 372.

On peut ainsi réaliser un lecteur de carte à puce fonctionnant à débit variable et pouvant fonctionner à très haut débit, ce lecteur pouvant être relié au port parallèle bidirectionnel d'un micro-ordinateur. Par ce port peuvent transiter non seulement les données échangées mais aussi quelques signaux de commande, et notamment des signaux de commande de la mémoire tampon et la donnée numérique représentant le rapport de division qui va définir la valeur du temps de bit.

Le micro-ordinateur n'a pas besoin d'être extrêmement rapide pour pouvoir recueillir des données contenues dans la carte à puce, même s'il effectue d'autres tâches en même temps que la lecture proprement dite. Le fonctionnement du lecteur est indépendant de la vitesse du micro-ordinateur. La mémoire tampon autorise le lecteur à avoir un fonctionnement indépendant de celui du micro-ordinateur. Ce dernier peut effectuer plusieurs tâches simultanées sans pour cela perdre des données en provenance de la carte. De plus cette mémoire tampon permet une utilisation du lecteur sous divers systèmes d'exploitation (Windows 95, Windows NT, Windows 3.11, DOS ....) (marques déposées).

D'une manière générale, l'intérêt principal de la présence d'une mémoire tampon associée au diviseur de fréquence programmable est de permettre au lecteur d'accepter différents protocoles de communication avec la carte, dans lesquels la valeur du temps de bit peut varier notamment de 2 à 372 temps de cycle d'horloge.

Des lecteurs sans microprocesseur ont déjà été proposés dans le passé, mais ils devaient alors fonctionner avec le protocole le plus lent possible prévu par la norme ISO 7816-3, et le micro-ordinateur devait s'adapter à ce protocole afin que le micro-ordinateur puisse lire sans en perdre une seule toutes les informations que la carte transmettait au lecteur.

D'autres caractéristiques et avantages de l'invention apparaîtront à la lecture de la description détaillée qui suit et qui est faite en référence aux dessins annexés dans lesquels :
- la figure 1 représente un schéma simplifié du contexte de l'application envisagée;
- la figure 2 représente le schéma d'ensemble du lecteur de carte selon l'invention.

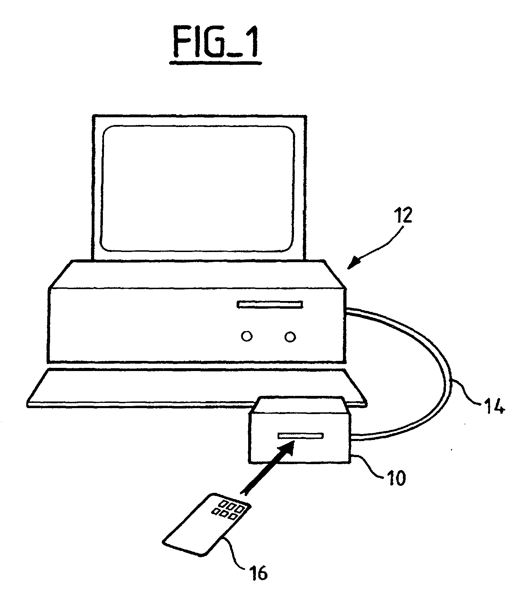

Sur la figure 1, le lecteur de carte à puce est désigné par la référence 10. Il est connecté à un micro-ordinateur 12 par un bus parallèle bidirectionnel 14. Une carte 16 peut être introduite dans le lecteur 10 en vue d'un échange de données piloté par le micro-ordinateur. La liaison entre la carte 16 et la puce s'effectue classiquement par les contacts de la carte et du lecteur, les données proprement dites étant échangées par une liaison série sur un contact dédié à cet échange (E/S). Les autres contacts de connexion entre le lecteur et la carte correspondent à une alimentation (VCC), une masse (GND), une horloge (CLK) fournie par le lecteur à la carte, et d'autres signaux de contrôle à destination de la carte, comme par exemple un signal de démarrage (RST), un signal de commande (CTRL) interne au lecteur qui permet par exemple de définir si l'échange est une lecture ou une écriture dans la carte. D'autres signaux peuvent être prévus, dépendant du type de carte utilisée et de l'application (six à huit contacts au total assurent le fonctionnement de la carte).

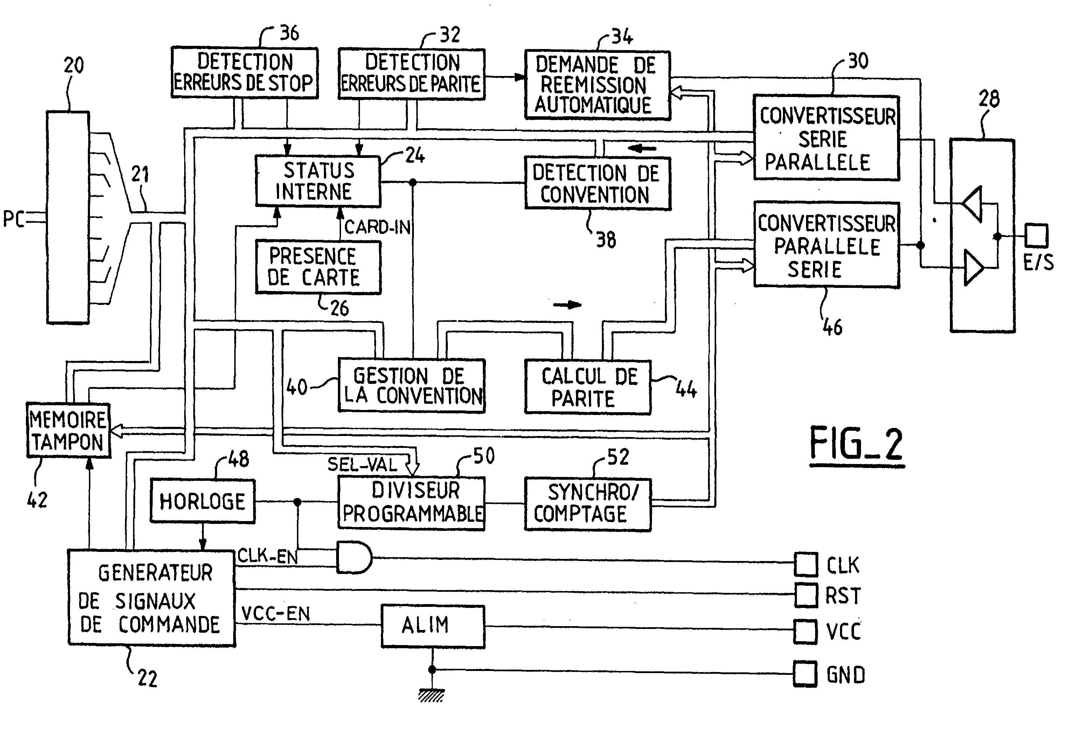

L'architecture du lecteur 10 selon l'invention est représentée à la figure 2.

La communication avec le micro-ordinateur est assurée à travers un connecteur 20 qui est relié par un bus de communication parallèle bidirectionnel au micro-ordinateur d'un côté et aux circuits internes du lecteur de l'autre. Ce bus 21 véhicule les données qui doivent être échangées entre la carte et le micro-ordinateur, et il véhicule également des signaux de contrôle permettant de faire fonctionner le lecteur. Il véhicule en particulier, comme on le verra, des signaux permettant de modifier le protocole de communication entre le lecteur et la carte puisque le lecteur ne comporte pas de microprocesseur qui pourrait assurer cette modification. Enfin, le bus 21 transmet les signaux d'état qui contrôlent son fonctionnement bidirectionnel.

Les signaux de contrôle émis par le micro-ordinateur vers le lecteur sont utilisés dans les divers circuits du lecteur. On a regroupé sous la désignation 22 la plupart des circuits du lecteur qui utilisent ces divers signaux de contrôle et qui pilotent la communication avec la carte (par exemple, génération de signaux à destination des contacts RST et CTRL à partir des ordres donnés par le micro-ordinateur, génération d'un signal CLK-EN d'autorisation de transmission d'un signal d'horloge à destination de la carte vers le contact CLK, génération d'un signal VCC-EN d'autorisation de transmission d'une tension d'alimentation à la carte, etc.).

Sur le bus parallèle de communication avec le lecteur, on peut trouver encore des signaux émis par le lecteur à destination du micro-ordinateur pour renseigner ce dernier sur le status interne du lecteur. Ces signaux peuvent être lus par le micro-ordinateur dans un registre d'état 24 connecté au bus 21. Certaines des informations du registre d'état 24 peuvent transiter par des conducteurs spécifiques du bus 21, autres que les conducteurs de données proprement dites : par exemple un conducteur peut être réservé à la fourniture d'un bit d'information globale indiquant si un échange se déroule normalement ou non. Les informations plus détaillées contenues dans le registre d'état transitent sur les conducteurs réservés aux données et ne sont fournies que sur interrogation du registre 24 par le micro-ordinateur.

Les informations sur l'état du lecteur peuvent comprendre notamment, comme on le décrira plus loin : une information sur la présence d'une carte dans le lecteur, une information sur la présence de données dans une mémoire tampon, et des informations sur les erreurs de transmission (erreur de parité ou erreur de stop dans les données échangées).

Un détecteur de présence de carte, 26, qui est en pratique un simple interrupteur actionné par l'insertion d'une carte à puce dans le lecteur, fournit un signal CARD-IN au registre d'état pour indiquer la présence de la carte.

Pour l'échange de données entre le micro-ordinateur et la carte, les opérations principales suivantes, qui seront détaillées ci-après, sont effectuées par le lecteur : stockage temporaire des données sous forme parallèle dans une mémoire de données; gestion de la parité et des bits de stop; détection et utilisation de la convention logique utilisée par la carte; conversion parallèle-série pour les données écrites dans la carte à puce, et conversion série-parallèle pour les données lues dans la carte.

L'échange de données entre la carte et le lecteur s'effectue par une liaison série bidirectionnelle, à travers un contact unique E/S du lecteur. Un amplificateur tampon bidirectionnel 28, appelé aussi convertisseur deux fils/un fil, assure la séparation entre les données entrantes dans le lecteur et les données sortantes. Les données lues en série dans la carte passent du contact E/S vers l'amplificateur tampon 28 et sont aiguillées vers la voie de données entrantes du lecteur. Elles sont converties en données parallèles dans un convertisseur série/parallèle 30 placé en aval de l'amplificateur 28 sur la voie entrante. Comme on le verra, le convertisseur série-parallèle échantillonne les données lues avec une période d'échantillonnage qui est appelée "temps de bit". Le temps de bit doit évidemment correspondre à la période d'émission des donnés série par la carte. Ce temps est un multiple de la période d'une horloge de référence interne du lecteur, transmise à la carte par le contact CLK.

Le convertisseur série parallèle 30 fournit ensuite en parallèle sur le bus 21 les données successives fournies par la carte. Si une donnée fournie par la carte comprend N bits (en général 12), la donnée est disponible en sortie du convertisseur 30 au bout de N temps de bit. Typiquement, une donnée fournie par la carte comporte huit bits utiles précédés d'un bit de départ (bit de "start") et suivies d'un bit de parité et de deux bits de terminaison (bits de "stop") . Ceci est précisé en détail dans les normes de réalisations de systèmes à cartes à puces (ISO 7816-3 notamment), et il n'est pas nécessaire de le développer. Le fait est que s'il y a des erreurs dans le bit de parité ou dans les bits de stop, cela veut dire que la transmission a été défectueuse et que la donnée utile peut être erronée. Dans le cas d'une erreur de parité il faut alors prévoir une réémission de la donnée par la carte, et c'est le lecteur qui gère directement, sans intervention du micro-ordinateur, cette détection d'erreur et la réémission qui doit suivre. Dans le cas d'erreurs de stop, il n'y a pas de demande de réémission envoyée vers la carte, mais l'information d'erreur est communiquée au micro-ordinateur par l'intermédiaire du registre d'état 24.

Un circuit 32 de détection des erreurs de parité a été représenté à la figure 2 sous forme d'un bloc connecté au bus parallèle 21 qui transmet les données utiles de la carte. Toutefois on comprendra que le circuit de détection des erreurs de parité pourrait aussi travailler directement sur les données en série issues de l'amplificateur 28, c'est-à-dire que le circuit 32 serait connecté en amont du convertisseur série-parallèle 30. Ce circuit de détection 32 calcule le bit de parité correspondant aux huit bits de la donnée utile reçue; il compare le résultat du calcul au dixième bit de la donnée reçue de la carte puisque ce dixième bit est le bit de parité calculé et envoyé par la carte. Le circuit 32 émet un signal d'erreur s'il n'y a pas identité entre ces deux bits, et il commande l'émission par un circuit 34 d'une demande de réémission de donnée. Les normes prévoient que la carte peut recevoir un tel ordre et qu'elle réémet la même donnée que précédemment, c'est-à-dire qu'elle n'incrémente pas l'adresse de mémoire d'où elle avait extrait la donnée précédente. L'erreur de parité est par ailleurs signalée au registre d'état 24.

On notera que le circuit 34 qui déclenche l'ordre de réémission est un circuit interne du lecteur, et que l'opération de réémission n'est pas gérée par le micro-ordinateur bien que le lecteur ne comporte pas de microprocesseur pour gérer cette situation. Le circuit 34 est donc un registre câblé pour envoyer automatiquement une donnée série interprétée par la carte comme une demande de réémission.

Un circuit 36 de détection d'erreur de stop vérifie que les onzième et douzième bits de la donnée transmise sont égaux aux valeurs attendues (par exemple deux bits de stop égaux à 1) et émet vers le registre d'état 24, à destination du micro-ordinateur, une information d'erreur si ce n'est pas le cas.

Un circuit 38 de détection de la convention logique utilisée par la carte sert à connaître la signification des états de potentiel haut et bas utilisée par la carte pour coder les données qu'elle envoie. La convention logique définit donc si l'état de potentiel haut représente un 1 ou un 0 logique.

La convention est propre aux données stockées dans la carte et il est nécessaire que le lecteur puisse connaître cette convention pour interpréter les données reçues de la carte. La convention est indiquée par la carte elle-même lors de sa mise en service dans le lecteur, et ceci se passe de la manière suivante : le lecteur envoie à la carte une demande de réponse à un signal de réinitialisation, à laquelle la carte doit répondre pour donner des informations sur le protocole qu'elle utilise; la carte envoie sa réponse, dans laquelle la convention est contenue, et le lecteur détecte cette convention. Plus précisément, le signal de réinitialisation, envoyé par les circuits 22 et 24 du lecteur sur ordre du micro-ordinateur, peut consister dans l'envoi de la tension d'alimentation entre les contacts VCC et GND, puis un envoi de l'horloge CLK, puis un changement d'état du contact RST qui était par défaut au niveau haut. Ceci constitue l'ordre d'initialisation, et le protocole de fonctionnement de toute carte à puce selon la norme ISO 7816 oblige la carte à répondre en renvoyant une donnée qui est la réponse à la réinitialisation (connue le plus souvent sous l'appellation anglaise "answer to reset"). La donnée renvoyée par la carte comprend huit bits utiles d'information sur la nature de la carte et sur son protocole de communication avec le lecteur; parmi ces huit bits, le quatrième définit la convention, directe ou inverse, utilisée par la carte. Le circuit 38 observe ce quatrième bit pour laisser passer la donnée utile telle quelle vers le micro-ordinateur, ou l'inverser.

Comme pour le circuit de détection des erreurs de parité et le circuit de détection des erreurs de stop, le circuit de détection de convention 38 a été représenté comme étant connecté au bus parallèle 21, mais il pourrait être connecté en amont du convertisseur série/parallèle 30. Si c'est le cas, il doit être commandé par les circuits de synchronisation et comptage de temps de bit, afin qu'il puisse repérer directement la valeur du quatrième bit de donnée utile dans la réponse à la réinitialisation; il commande alors directement le convertisseur série/parallèle pour qu'il fournisse ultérieurement des données inversées dans le cas d'une convention inverse. Dans le cas où les circuits 32 et 36 sont placés en amont du convertisseur série-parallèle, ce dernier ne fournit sur le bus 21 que les huit bits utiles des données de la carte et non pas les douze bits transmis pas la carte.

On notera que si la réponse à la réinitialisation fait apparaître qu'on doit utiliser une convention inverse, il faut bien sûr que les processus d'écriture dans la carte tiennent eux aussi compte de cette convention. Un circuit 40 de gestion de convention d'écriture dans la carte assure cette conversion en fonction de l'indication donnée par le circuit 38 ou par le registre d'état 24 si ce dernier contient la convention détectée.

Les données envoyées par la carte, mises en parallèle, et vérifiées par les circuits de détection 32 et 36 sont transférées immédiatement dans une mémoire tampon 42. La cadence de transfert est la cadence imposée par le protocole de transmission entre le lecteur et la carte. Elle ne dépend pas des aptitudes du micro-ordinateur à échantillonner en temps réel les informations reçues de la carte. L'échange entre le lecteur et la carte peut se faire très rapidement et les données peuvent être lues ensuite plus lentement par le micro-ordinateur dans la mémoire tampon, pendant qu'il n'est pas en train d'effectuer une autre tâche. Lorsqu'il s'agit de transférer des données entre la mémoire et la carte, le fonctionnement de la mémoire 42 est commandé par un séquenceur au rythme des signaux de synchronisation de temps de bit dont on parlera plus loin; sur la figure 2, ce séquenceur est considéré comme faisant partie de la mémoire 42. Mais le transfert des données entre la mémoire et le micro-ordinateur est contrôlé par le micro-ordinateur lui-même, au rythme de ce dernier. Il y a donc asynchronisme entre les deux échanges, et ceci aussi bien en lecture qu'en écriture de données.

Les données que le micro-ordinateur peut écrire dans la carte transitent par le même bus 21 que les données lues dans la carte, et elles sont stockées dans la mémoire tampon 42.

Les données envoyées de la mémoire tampon vers la carte passent par le circuit 40 de gestion de la convention, comme on l'a expliqué plus haut. Elles passent ensuite dans un circuit de gestion de parité 44 qui calcule la valeur de la parité en fonction des valeurs individuelles des huit bits de donnée utiles, et qui affecte cette valeur de parité au bit de rang 10 (on rappelle que la donnée globalement transmise à la carte comprend dans l'ordre un bit de start, huit bits utiles, un bit de parité, et deux bits de stop).

Les bits de stop et de start peuvent être introduits à un endroit quelconque de la transmission, y compris après la conversion parallèle-série; ils peuvent être fournis par le micro-ordinateur.

La donnée à transmettre de la mémoire tampon 42 à la carte passe alors par un convertisseur parallèle-série 46. De là, elle est envoyée à l'amplificateur tampon bidirectionnel 28 qui l'applique au contact E/S relié à la carte à puce.

Le séquencement du fonctionnement du lecteur est assuré d'une part par une horloge de référence 48, qui est fournie à la carte sur le contact CLK, et d'autre part, comme on va le voir, par un signal de synchronisation de temps de bit dont la période est multiple de- la période d'horloge de référence, le rapport de multiplication étant variable et déterminé directement par le micro-ordinateur. La fréquence de l'horloge peut être de 5 MHz par exemple.

Le signal d'horloge de référence est appliqué à un diviseur de fréquence programmable 50 qui fournit à sa sortie une fréquence divisée par un nombre défini par un signal numérique SEL-VAL fourni par le micro-ordinateur. Ce signal SEL-VAL représente soit directement le rapport de division, soit un code identifiant un rapport parmi plusieurs rapports prédéterminés possibles. Il constitue en tous cas le signal de commande du diviseur à rapport de division commandable.

La sortie du diviseur est un signal dont la période est le temps de bit. Ce signal est mis en forme et compté dans un circuit d'élaboration de signaux de synchronisation 52, pour fournir des signaux de synchronisation dont la période représente le temps de bit désiré, et dont le comptage représente le rang des bits à partir d'un début de transmission de donnée. Les signaux de synchronisation peuvent être décalés les uns par rapport aux autres : par exemple, les signaux qui seront utilisés pour la voie d'écriture dans la carte peuvent être décalés légèrement par rapport aux signaux qui seront utilisés pour la voie de lecture.

Ces signaux de synchronisation servent notamment à piloter les convertisseurs parallèle-série et série-parallèle pour que la conversion s'exécute en synchronisme avec la transmission de données depuis la carte ou vers la carte. Les signaux pour les convertisseurs sont non seulement des signaux dont la période est égale au temps de bit, mais aussi des signaux comptant les temps de bit jusqu'à douze si les données transmises entre la carte et le lecteur comprennent douze bits. C'est le circuit de synchronisation et de comptage 52 qui fournit les divers signaux utiles.

La carte utilise l'horloge du lecteur et fonctionne avec un protocole qui règle le temps de bit à un certain multiple de la fréquence d'horloge. Par défaut un temps de bit est égal à 372 cycles d'horloge, mais on fait maintenant des protocoles plus rapides (31 cycles) et on peut même souhaiter que des protocoles ultra-rapides (2 bits) se développent. Le micro-ordinateur fournira une valeur SEL-VAL pour imposer au lecteur un temps de bit correspondant à celui de la carte. Le ou les signaux de synchronisation élaborés par le lecteur peuvent d'ailleurs être transmis non seulement aux circuits internes du lecteur mais aussi au micro-ordinateur sur des conducteurs réservés à cet effet dans le port de communication.

Les signaux de synchronisation sont 'fournis également à d'autres circuits du lecteur, par exemple le circuit 34 de demande de réémission automatique; en effet, ce circuit doit produire une série de bits représentant l'ordre de réémission, avec le temps de bit correspondant au protocole.

On notera que pour assurer le démarrage du circuit, le protocole est imposé par défaut avec un temps de bit long de 372 périodes d'horloge, de sorte que la réponse à la réinitialisation, émise avec ce temps de bit, puisse être échantillonnée avant que le micro-ordinateur ne détecte le protocole de la carte et n'impose au lecteur le temps de bit qui sera utilisé dans les échanges suivants.

La valeur numérique SEL-VAL est stockée dans un registre d'état volatil à l'entrée de commande du diviseur 50.

Un point important de la réalisation de l'invention est le fait que certains circuits du lecteur (notamment à l'intérieur du circuit 22 qui élabore les signaux de contrôle assurant le fonctionnement du lecteur) peuvent comprendre des registres de mémoire vive, chargés directement par le micro-ordinateur lors de l'initialisation du fonctionnement (ou après la réponse à l'intialisation de la carte). Le signal SEL-VAL en particulier est chargé dans un tel registre pour être conservé pendant le fonctionnement des échanges, jusqu'à réception d'un prochain ordre de changement de temps de bit envoyé par le micro-ordinateur.

## Revendications

1. Lecteur de carte à puce fonctionnant sans microprocesseur sous le contrôle d'un micro-ordinateur (12), pour assurer des échanges de données entre une carte à puce (16) et le micro-ordinateur, le lecteur comportant une mémoire tampon de données (42) permettant de stocker provisoirement une donnée lue dans la carte en attendant sa lecture par le micro-ordinateur, **caractérisé en ce que** le lecteur comporte d'autre part un diviseur de fréquence programmable numériquement (50), apte à recevoir, à partir d'un bus de sortie du micro-ordinateur, un signal numérique de commande (SEL-VAL) représentant un rapport de division désiré, le diviseur de fréquence recevant un signal d'horloge de référence (48) élaboré dans le lecteur, et fournissant un signal de synchronisation pour les échanges de données entre la carte et le lecteur, ce signal de synchronisation ayant pour période une valeur de temps de bit désirée, cette période étant obtenue par division de fréquence de l'horloge de référence selon le rapport de division fourni par le micro-ordinateur.

2. Lecteur de carte selon la revendication 1, **caractérisé en ce qu'**il comporte un circuit (52) d'élaboration de signaux de synchronisation, pour fournir des signaux de synchronisation dont la période représente le temps de bit désiré, et dont le comptage représente le rang des bits à partir d'un début de transmission de données, ce circuit commandant au moins des circuits de conversion série-parallèle (30) et parallèle-série (46) du lecteur.

3. Lecteur de carte selon la revendication 2, **caractérisé en ce que** le circuit d'élaboration de signaux de synchronisation commande la mémoire tampon (42).

4. Lecteur de carte selon l'une des revendications 1 à 3, **caractérisé en ce que** le diviseur de fréquence (50) est programmable pour assurer un rapport de division compris entre 2 et 372.

5. Lecteur de carte selon l'une des revendications 1 à 4, **caractérisé en ce que** le diviseur de fréquence est programmable pour assurer au moins les rapports de division 2, 31 et 372.

## Patentansprüche

1. Chip-Kartenleser ohne Mikroprozessor, wobei der Kartenleser von einem Minitaturrechner (12) gesteuert wird, um den Datenaustausch zwischen einer Chipkarte (16) und dem Mikrorechner (12) zu gewährleisten, und wobei der Leser einen Datenpufferspeicher (42) umfaßt, der es erlaubt, ein von der Karte gelesenes Datum vorläufig zu speichern, um dieses bis zum Lesen durch den Mikrorechner bereitzuhalten, **dadurch gekennzeichnet, daß**
der Leser einen digital programmierbaren Frequenzteiler (50) umfaßt, der ein digitales Befehlssignal (SEL-VAL) von einem Ausgangsbus des Mikrorechners empfangen kann, welches ein gewünschtes Teilungsverhältnis darstellt, wobei der Frequenzteiler ein in dem Leser erzeugtes Referenztaktsignal (48) empfängt und ein Synchronisationssignal für den Datenaustausch zwischen der Karte und dem Leser zur Verfügung stellt, und das Synchronisationssignal einen Wert gleich der zeitlichen Bitlänge als Periode hat und diese Periode durch Teilung der Referenztaktfrequenz gemäß dem von dem Mikrorechner zur Verfügung gestellten Teilungsverhältnisses erhalten wird.

2. Kartenleser nach Anspruch 1, **dadurch gekennzeichnet, daß** dieser einen Signalverarbeitungsschaltkreis (52) zur Synchronisation umfaßt, um Synchronisationssignale zur Verfügung zu stellen, wobei deren Periode die gewünschte Bitdauer darstellt und die Zählung der Signale die Bitstelle ausgehende vom Anfang der Datenübertragung angibt, wobei der Schaltkreis zumindest Schaltkreise zur seriell/parallel-Umwandlung (30) und parallel/seriell-Umwandlung (46) des Lesers steuert.

3. Kartenleser nach Anspruch 2, **dadurch gekennzeichnet, daß** der Signalverarbeitungsschaltkreis zur Synchronisation einen Pufferspeicher (42) steuert.

4. Kartenleser nach einem der Ansprüche 1 bis 3, **dadurch gekennzeichnet, daß** der Frequenzteiler (50) programmierbar ist, um ein Teilungsverhältnis zwischen 2 und 372 zur Verfügung zu stellen.

5. Kartenleser nach einem der Ansprüche 1 bis 4, **dadurch gekennzeichnet, daß** der Frequenzteiler programmierbar ist, um zumindest ein Teilungsverhältnis von 2, 31 und 372 zur Verfügung zu stellen.

## Claims

1. Smart-card reader functioning without a microprocessor under the control of a microcomputer (12), in order to perform data exchanges between a smart card (16) and the microcomputer, the reader having a buffer data memory (42) making it possible to temporarily store a data item read from the card while waiting for it to be read by the microcomputer, **characterised in that** the reader also comprises a digitally programmable frequency divider (50), capable of receiving, from an output bus of the microcomputer, a digital control signal (SEL-VAL) representing a desired division ratio, the frequency divider receiving a reference clock signal (48) produced in the reader, and supplying a synchronisation signal for the data exchanges between the card and the reader, this synchronisation signal having as its period a desired bit time value, this period being obtained by dividing the reference clock frequency according to the division ratio supplied by the microcomputer.

2. Card reader according to Claim 1, **characterised in that** it comprises a circuit (52) for preparing synchronisation signals in order to supply synchronisation signals, the period of which represents the desired bit time, and the counting of which represents the rank of the bits starting from a preliminary data transmission, this circuit controlling at least serial/parallel (30) and parallel/serial (46) conversion circuits of the reader.

3. Card reader according to Claim 2, **characterised in that** the circuit for preparing synchronisation signals controls the buffer memory (42).

4. Card reader according to one of Claims 1 to 3, **characterised in that** the frequency divider (50) is programmable in order to ensure a division ratio of between 2 and 372.

5. Card reader according to one of Claims 1 to 4, **characterised in that** the frequency divider is programmable in order to ensure at least the division ratios 2, 31 and 372.
